**Europäisches Patentamt**

**European Patent Office**

**Office européen des brevets**

(19)

(11) Numéro de publication: **0 117 790**
**B1**

# (12) FASCICULE DE BREVET EUROPEEN

(45) Date de publication du fascicule du brevet:
**13.05.87**

(21) Numéro de dépôt: **84400218.8**

(22) Date de dépôt: **01.02.84**

(51) Int. Cl.⁴: **G 01 N 27/90**

(54) **Sonde multibobines à courant de Foucault munie d'un dispositif d'équilibrage des bobines.**

(30) Priorité: **08.02.83 FR 8301951**

(43) Date de publication de la demande:
**05.09.84 Bulletin 84/36**

(45) Mention de la délivrance du brevet:
**13.05.87 Bulletin 87/20**

(84) Etats contractants désignés:
**BE DE FR GB IT SE**

(56) Documents cités:
**FR - A - 2 424 515**
**FR - A - 2 507 310**
**US - A - 3 823 368**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Detriche, Jean-Marie, 38, rue de Tourville, F-78100 Saint Germain en Laye (FR)**
Inventeur: **Houche, Didier, 1, rue de la Sablière, F-41100 Vendome (FR)**
Inventeur: **Gachet, Laurent, 25, Avenue Bosquet, F-75007 Paris (FR)**

(74) Mandataire: **Mongrédien, André et al, c/o BREVATOME 25, rue de Ponthieu, F-75008 Paris (FR)**

# Description

La présente invention, due aux travaux de Messieurs DETRICHE de la Société C.E.R.M., GACHET et HOUCHE du Commissariat à l'Energie Atomique, concerne une sonde à courants de Foucault comportant plusieurs bobines et munie d'un dispositif d'équilibrage c'est-à-dire, de réglage du courant de repos des bobines. A titre d'exemple non limitatif, l'invention se rapporte au problème de la détermination, à l'aide de bobines juxtaposées disposées en lignes ou en matrices, du profil du joint séparant deux pièces à souder afin de commander le positionnement automatique d'un organe tel qu'une torche de soudage par rapport à ce joint ou encore de faire varier certains paramètres de soudage en fonction du profil détecté. Cependant, cette application n'est pas limitative et l'invention peut aussi être utilisée pour déterminer le profil de toutes surfaces métalliques conductrices ou pour réaliser le contrôle non destructif de telles surfaces. Elle peut aussi s'appliquer à des bobines non juxtaposées destinées à délivrer des informations comparables.

Le principe d'une sonde à courants de Foucault consiste à alimenter une bobine par un courant électrique sinusoïdal de haute fréquence, de manière à créer un champ alternatif qui induit, dans une pièce en matériau conducteur de l'électricité exposée en vis-à-vis de la sonde, des courants de Foucault créant en retour un champ qui s'oppose au champ initial et modifie l'impédance de la bobine. Les variations de l'impédance de la bobine donnent une indication sur la disposition de la bobine par rapport à la pièce en vis-à-vis et sur le profil particulier de cette pièce; cette indication est de manière générale une information sur la distance séparant la bobine de la pièce dans le cas d'une sonde utilisée en proximètre. Ce peut être aussi une information sur la structure de la pièce dans le cas d'une sonde utilisée en contrôle non destructif.

Une sonde à courants de Foucault peut comporter une ou plusieurs bobines. Dans le cas d'une sonde à une seule bobine, la détection du profil d'une pièce ou le contrôle non destructif de cette pièce nécessite un moyen pour réaliser un balayage mécanique de la pièce par la bobine. Dans une sonde à plusieurs bobines, ce balayage mécanique est souvent remplacé par un balayage électronique des bobines juxtaposées qui fournissent chacune un point du profil à déterminer. Un tel dispositif est souvent préférable à un dispositif à une seule bobine dans lequel le balayage mécanique introduit des vibrations dans la sonde qui peuvent s'avérer préjudiciables à la précision des mesures.

De manière générale, la sensibilité de la mesure est maximale lorsque les bobines sont réglées à la surtension. Les sondes à courant de Foucault sont donc, dans ce cas, munies de moyens pour régler chaque bobine à la surtension.

Le moyen de réglage du courant le plus couramment utilisé consiste à utiliser, pour chaque bobine, un réseau résistance-capacité variable, relié à une extrémité de la bobine d'une part, à la masse d'autre part. Cette solution a pour inconvénient de nécessiter autant de réseaux résistance-capacité que de bobines, ce qui peut représenter plusieurs dizaines de réseaux et autant de réglages sur la sonde.

L'utilisation de plusieurs bobines juxtaposées qui peuvent éventuellement être organisées en matrice est délicate à cause des interactions magnétiques entre bobines proches. En particulier, le signal délivré par une bobine peut être affecté par l'alimentation des bobines proches, ce qui rend difficile l'équilibrage simultané de toutes les bobines.

Le brevet français FR-A-24 24 515 déposé le 25 avril 1979 apporte une solution à ce problème de l'alimentation des bobines, en proposant une excitation séquentielle de celles-ci. Cette invention propose également d'utiliser autant de moyens de traitement des signaux issus des bobines qu'il y a de bobines, ce qui augmente le nombre de circuits donc accroît le coût de l'appareil et diminue sa fiabilité.

Le brevet français FR-A-25 07 310 déposé le 4 juin 1981 apporte une amélioration au brevet précédent. Les bobines sont excitées en parallèle et délivrent des signaux à un multiplexeur relié à un moyen de traitement unique. Le traitement se fait donc séquentiellement sur chacun des signaux issus des bobines. L'utilisation d'un moyen de traitement unique permet donc de simplifier le dispositif, mais celui-ci est encore délicat à équilibrer car il faut ajuster le réseau résistance-capacité variable de chaque bobine de telle sorte que chacune des bobines soit réglée à la surtension. L'homme de l'art utilise ici des capacités variables à air miniaturisées et placées le plus près possible des bobines et dont la plage de variation est de l'ordre de quelques pourcents, ce qui n'est pas toujours suffisant pour annuler totalement les disparités des caractéristiques des différentes bobines qui par construction peuvent différer de plus de 10%.

L'objectif de l'invention est de pallier ces inconvénients en fournissant un appareil comportant une sonde à courants de Foucault muni d'un moyen de réglage de chaque bobine ayant une grande dynamique donc facile à utiliser.

Ce but est atteint par l'utilisation d'un moyen d'excitation des bobines qui délivre à chaque bobine un signal d'excitation dont la fréquence est différente d'une bobine à l'autre. La fréquence d'excitation d'une bobine dépend des caractéristiques de la bobine et du réseau résistance-capacité associé à cette bobine. Cette fréquence d'excitation est telle que la bobine est réglée à la surtension.

De manière plus précise, l'invention a pour objet une sonde à courants de Foucault comportant plusieurs bobines et munie d'un dispositif d'équilibrage des bobines comprenant une pluralité de bobines, un circuit de réglage dudit courant de repos de chaque bobine, un oscillateur haute fréquence pour exciter chaque bobine, au moins un moyen de traitement des signaux aux bornes de chaque bobine, une pluralité de moyens de mémorisation des signaux traités, chaque moyen de mémorisation étant associé à une bobine, des moyens de commutation entre ces différents moyens et un moyen de commande desdits moyens de commutation.

Selon l'invention, le circuit de réglage comprend au moins un réseau résistance-capacité et un moyen de réglage de la surtension de chaque bobine agissant sur la fréquence du signal électrique délivré par l'oscillateur haute fréquence et le moyen de commande agit sur les moyens de commutation de sorte qu'à chaque instant un seul moyen de mémorisation est adressé, ledit moyen de mémorisation recevant, via ledit moyen de traitement, le signal délivré par une bobine réglée à la surtension et reliée à la masse à travers ledit réseau résistance-capacité.

De nombreux modes de réalisation de cette sonde sont possibles. Ces modes de réalisation sont liés à la nature des liaisons électriques et en particulier à la présence ou à l'absence de moyens de commutation de type multiplexeur ou démultiplexeur entre deux moyens de la sonde. Ces moyens de commutation peuvent être disposés entre l'oscillateur et les bobines, entre les bobines et les points de mesure, entre les bobines et la masse, et entre les points de mesure et les moyens de traitement, un point de mesure étant un point où est prélevé le signal délivré par une bobine pour être appliqué à un moyen de traitement.

La liaison oscillateur-bobines peut être soit directe, l'oscillateur étant relié à toutes les bobines, soit réalisé par un démultiplexeur. La liaison bobines-points de mesure peut être soit directe soit réalisée par un multiplexeur; dans les deux cas, le point de mesure peut être unique (bobines reliées entre elles ou point de mesure pris sur la sortie du multiplexeur) ou non (bobines non reliées entre elles ou points de mesure pris sur les entrées du multiplexeur). La liaison bobines-masse peut être soit directe si le réseau résistance-capacité associé à chaque bobine est en permanence relié à la masse, soit multiplexée si ces réseaux sont reliés aux entrées d'un multiplexeur dont la sortie est reliée à la masse. Dans le premier cas, le réseau résistance-capacité est unique si les bases des bobines sont réliées entre elles. Enfin, la liaison points de mesure-moyen de traitement peut être soit directe, un moyen de traitement étant relié à chaque point de mesure, soit multiplexée. Dans ce dernier cas, le multiplexeur peut être remplacé par un sommateur, le choix de la voie de mesure étant effectué par un multiplexage antérieur.

Les différentes combinaisons possibles entre ces liaisons directes ou multiplexées définissent autant de modes de réalisation de sondes multibobines. Mais certaines combinaisons correspondent à des montages inopérants. C'est le cas par exemple si simultanément la liaison oscillateur-bobines est directe, la liaison bobines-points de mesure est directe (le point de mesure n'étant pas unique), la liaison bobines-masse est directe, et la liaison points de mesure-moyen de traitement est directe.

L'invention concerne bien entendu uniquement les sondes multibobines obtenues par une combinaison de moyens de commutation qui peuvent être commandés de sorte qu'à chaque instant un seul moyen de mémorisation est adressé, ledit moyen de mémorisation recevant, via un moyen de traitement, le signal délivré par une bobine réglée à la surtension et reliée à la masse travers son réseau résistance-capacité.

Selon un mode de réalisation de l'invention, le moyen de réglage du circuit d'équilibrage comprend un commutateur dont la sortie est reliée à l'oscillateur haute fréquence et dont les entrées, en nombre égal au nombre de bobines, sont reliées à des éléments de réglage.

Selon une caractéristique secondaire, les éléments de réglage sont des résistances variables.

Selon une autre caractéristique secondaire, les éléments de réglage sont des capacités variables.

D'autres caractéristiques et avantages de l'invention ressortiront mieux de la description qui va suivre, donnée à titre illustratif mais non limitatif, en référence aux figures annéxées, dans lesquelles:

— la figure 1 représente de façon schématique une sonde à courants de Foucault comportant plusieurs bobines, conforme à l'invention, utilisée dans la détermination du profil d'une surface,

— la figure 2 représente le circuit de traitement en proximètre du signal délivré par la sonde à courants de Foucault dans le dispositif de la figure 1,

— la figure 3 représente le circuit déphaseur logique utilisé dans le circuit de traitement représenté sur la figure 2,

— la figure 4 représente le circuit discriminateur de phase utilisé dans le circuit de traitement de la figure 2,

— la figure 5 représente un circuit de traitement et d'échantillonnage conforme à l'invention d'une sonde à courants de Foucault comprenant un nombre n de bobines,

— la figure 6 représente la courbe de variation de la sensibilité de la mesure de phase en fonction de la fréquence du signal appliqué à la bobine.

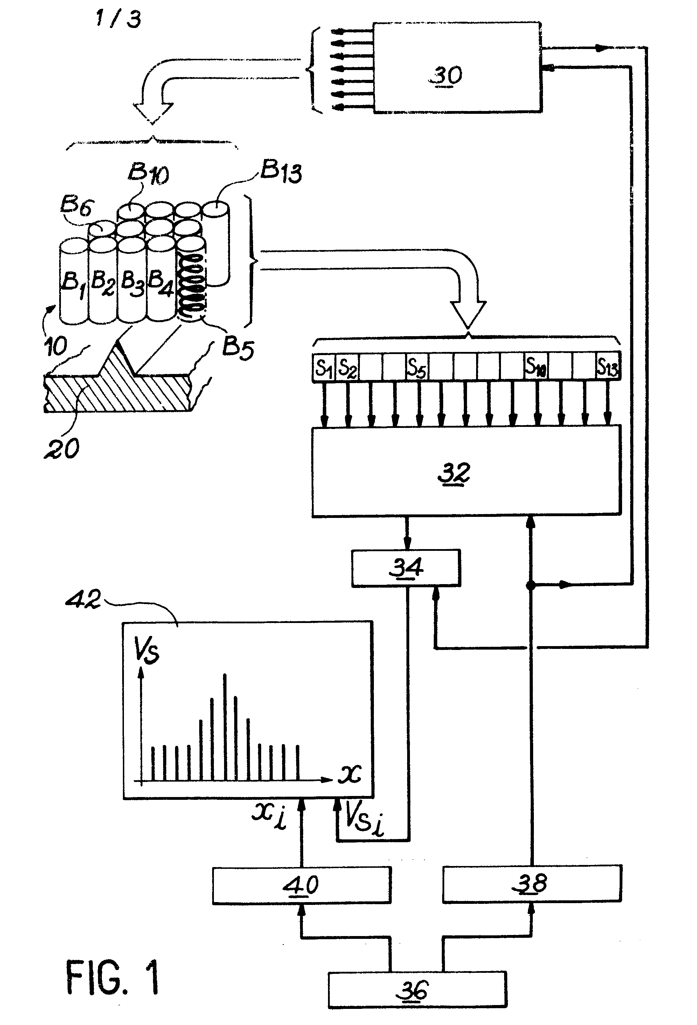

Sur la figure 1, on a représenté le cas d'une sonde 10 à courants de Foucault comportant plusieurs bobines, et utilisée pour détecter le profil de la surface 20 d'une pièce conductrice.

Cette sonde comprend un moyen de commutation entre l'oscillateur et les bobines et un autre moyen de commutation entre les points de mesure, en nombre égal au nombre de bobines, et un moyen de traitement unique. La liaison bobines-masse n'est pas représentée. Ces moyens de commutation permettent une excitation séquentielle de chaque bobine.

A titre d'exemple, cette sonde comprend treize bobines $B_1$, ..., $B_{13}$ disposées sur trois rangées décalées. Ces trois rangées de bobines sont proches les unes des autres de telle sorte que la sonde 10 détecte le profil d'une ligne de la surface 20 parallèle à une rangée de bobines plutôt qu'une aire de ladite surface 20. On comprend alors que l'utilisation de plusieurs rangées décalées de bobines permet d'augmenter la résolution de la sonde 10 puisque l'on a sur une sonde 10 de longueur donnée, égale à la distance entre les centres des bobines $B_1$ à $B_5$, d'autant plus de bobines qu'il y a de rangées.

Ces bobines $B_1$ à $B_{13}$ sont, conformément à l'invention, réglées individuellement à la surtension par un moyen 30 qui comprend un oscillateur haute fréquence alimentant séquentiellement les bobines et dont la fréquence est ajustée à une valeur propre pour chaque bobine. Les signaux $S_1$ à $S_{13}$ délivrés séquentiellement par chacune des bobines $B_1$ à $B_{13}$ de la sonde 10 sont appliqués sur l'entrée d'un multiplexeur 32 utilisé comme commutateur. Celui-ci injecte successivement chacun de ces signaux $S_1$ à $S_{13}$ dans un circuit de traitement unique 34 qui reçoit aussi un signal de référence du moyen 30. Un moyen de commande 36 permet simultanément par l'intermédiaire d'un circuit 38 d'effectuer l'adressage du multiplexeur 32 et du moyen 30 ce qui réalise l'adressage d'une bobine $B_i$ de la sonde 10. Le circuit de traitement 34 délivre alors un signal $V_{Si}$ qui est mémorisé dans un bloc mémoire 42. Le moyen de commande 36 active en outre un circuit 40 qui injecte dans le bloc mémoire 42, en parallèle avec le signal $V_{Si}$, un signal $x_i$ qui rend compte de la position de la bobine $B_i$. Le balayage de l'ensemble des bobines ainsi réalisé par une série de treize impulsions sous l'action du moyen de commande 36 grâce au multiplexeur 32 et au moyen 30 conduit à introduire dans le bloc mémoire 42 le profil image du profil objet placé en vis-à-vis de la sonde.

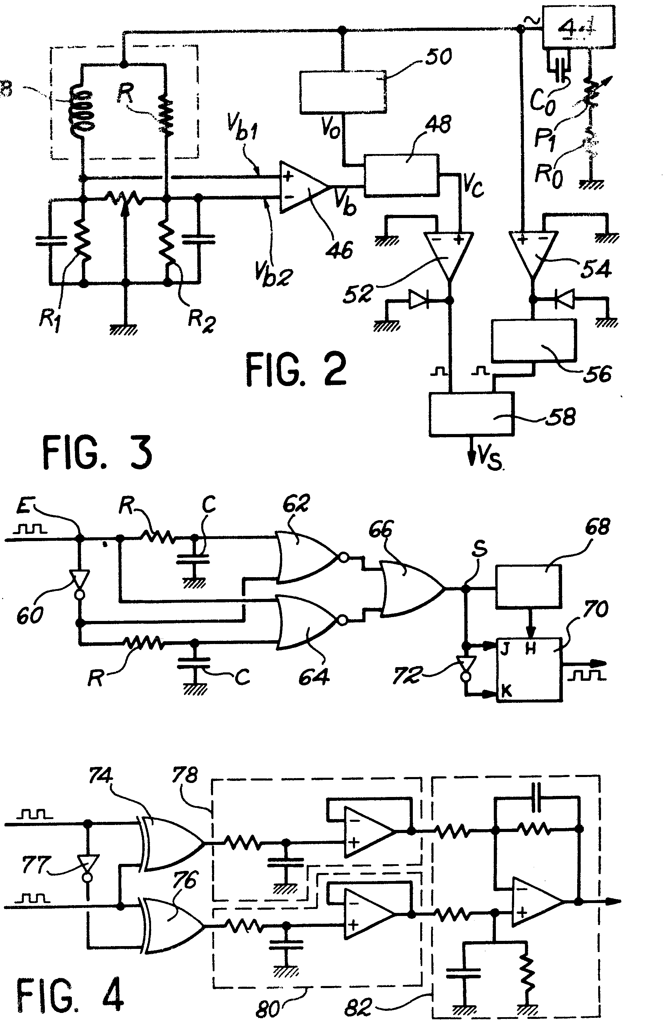

On voit sur la figure 1 que le profil image apparaissant dans le bloc mémoire 42 n'est pas identique au profil réel de la surface 20 placée en face de la sonde 10. Cette différence résulte du caractère non linéaire de la caractéristique de l'ensemble capteur-circuit de traitement 34 qui ressortira de la description détaillée de ce circuit effectuée sur la base des figures 2 à 4.

On a représenté sur la figure 2 le circuit de traitement électronique 34 des signaux délivrés par la sonde à courants de Foucault 10. Ce circuit permet d'effectuer une mesure différentielle de phase entre le signal issu de la bobine B et un signal de référence. Cette mesure est utilisée pour déterminer par exemple la distance qui sépare l'extrémité de la sonde de la surface en vis-à-vis.

Afin de permettre la détection des variations de l'impédance de la bobine B de la sonde, celle-ci est placée avec une résistance de référence R dans un pont de mesure symétrique dont les deux branches $R_1$ et $R_2$ servent à assurer l'équilibre. Le pont de mesure ainsi constitué est alimenté entre le point haut défini par la jonction de la bobine B avec la résistance R et le point bas défini par la jonction des branches $R_1$ et $R_2$ par un signal sinusoïdal haute fréquence (par exemple 240 kHz) provenant d'un oscillateur haute fréquence 44. La fréquence de ce signal sinusoïdal est déterminée par une capacité $C_0$ et une résistance $R_0+P_1$, où $P_1$ est une résistance variable ajustée de telle sorte que la bobine B soit à la surtension. Les signaux de sortie sinusoïdaux $V_{b1}$ et $V_{b2}$ pris respectivement aux bornes communes des branches B et $R_1$ et R et $R_2$ sont transmis respectivement à la borne + et à la borne − d'un amplificateur différentiel 46 qui délivre un signal sinusoïdal $V_b$. On voit que ce montage permet de faire une mesure différentielle de phase entre le signal $V_{b1}$ issu de la bobine B et le signal $V_{b2}$ proportionnel et en phase avec le signal émis par l'oscillateur. Le signal $V_b$ est injecté dans un sommateur 48 avec un signal $V_0$ qui correspond au signal injecté dans le pont de mesure par l'oscillateur 44 et déphasé de $\frac{\pi}{2}$ par un déphaseur 50. Le signal sinusoïdal $V_c$ délivré par le sommateur 48 est injecté à la borne + d'un comparateur 52 dont la borne − est connectée à la terre. De même, le signal sinusoïdal délivré par l'oscillateur 44 est injecté à la borne + d'un autre comparateur 54 dont la borne − est également reliée à la terre. Les comparateurs 52 et 54 délivrent des signaux logiques positifs pour les alternances positives des signaux sinusoïdaux qui leur sont injectés. Le signal logique délivré par le comparateur 54 est représentatif des alternances positives du signal sinusoïdal délivré par l'oscillateur 44. Il est injecté dans un déphaseur logique 56 délivrant un signal déphasé d'une valeur donnée par rapport au signal d'entrée. Ce signal déphasé est à son tour injecté dans un discriminateur de phase 58 en même temps que le signal délivré par le comparateur 52, ce dernier étant représentatif de la valeur des signaux aux bornes de la bobine B et de la résistance R. Le discriminateur de phase 58 délivre un signal $V_s$ représentatif de la différence de phase entre le signal $V_{b1}$ issu de la bobine B et le signal de référence $V_{b2}$ lié à l'oscillateur 44.

Comme le montre la figure 3, le déphaseur logique 56 comprend un inverseur 60 et deux circuits RC permettant de retarder le signal injecté en E dans le déphaseur et le signal sortant de l'inverseur 60. Le signal injecté dans le déphaseur et retardé par l'un des circuits RC, ainsi que le signal sortant de l'inverseur 60 sont injectés dans une première porte NON/OU 62. De même, le signal injecté en E dans le déphaseur 56 ainsi que le signal sortant de l'inverseur 60 et retardé par le second circuit RC sont injectés dans une seconde porte NON/OU 64. Les signaux délivrés par chacune des portes NON/OU 62 et 64 sont injectés dans une porte OU 66 qui délivre en S un signal logique dont chaque impulsion correspond au début et à la fin d'un créneau du signal injecté à l'entrée E du déphaseur 56. Ce signal logique est injecté à l'entrée d'un monostable 68, à l'entrée J d'une bascule JK 70 et, par l'intermédiaire d'un inverseur 72, à l'entrée K de cette dernière. Le signal de sortie du monostable 68, qui correspond à une suite de créneaux de durée déterminée débutant avec un retard déterminé par rapport à chaque impulsion du signal délivré en S, est injecté à l'entrée H de la bascule JK dont le signal de sortie délivré en Q est identique au signal injecté à l'entrée E du déphaseur mais déphasé selon une valeur déterminée par le retard imposé par le monostable 68. Ce signal de sortie est injecté dans le discriminateur de phase 58.

Comme le montre la figure 4, les deux entrées du discriminateur de phase 58 sont reliées, d'une part, à une porte OU EXCLUSIF 74, et d'autre part, à une porte OU EXCLUSIF 76 après passage dans un inverseur 78 du signal provenant du déphaseur logique 56. La sortie de chacune des portes OU EXCLUSIF 74, 76 est reliée à un intégrateur 78, 80 dont les signaux de sortie, représentant la composante continue de chacun des signaux injectés à l'entrée du discriminateur de phase, sont injectés dans un soustracteur 82 délivrant le signal de sortie continu $V_s$ dont la valeur correspond à la différence de phase entre le signal délivré par le déphaseur 56 et le signal issu du comparateur 52.

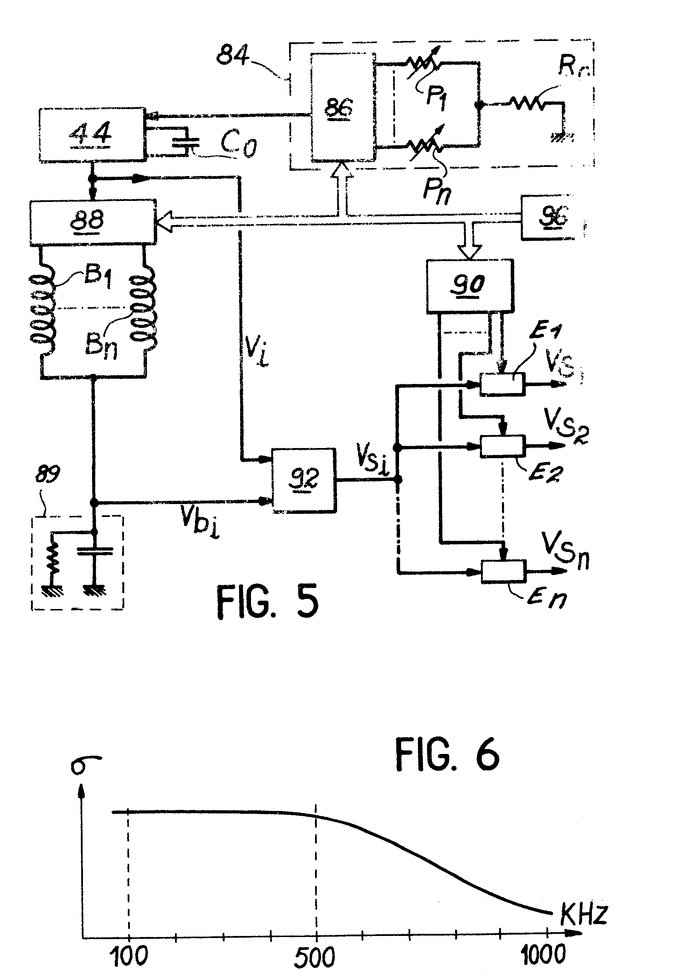

Sur la figure 5, on a représenté un circuit de traitement et d'équilibrage d'une sonde à courants de Foucault comprenant n bobines $B_1$, ... $B_n$ et un moyen de traitement unique. La liaison oscillateur-bobines est multiplexée; les bases des bobines sont reliées entre elles à un unique réseau résistance-capacité 89 et au moyen de traitement 92.

Chacune des bobines $B_1$, ... $B_n$ est excitée séquentiellement par l'oscillateur haute fréquence 44. La fréquence de cet oscillateur haute fréquence 44 est déterminée pour chaque bobine par la valeur d'une capacité $C_0$ et par la valeur d'une résistance fixée par le moyen de réglage 84 comprenant un commutateur 86 à une sortie et n entrées, chacune reliée à un élément de réglage $P_i$, où $1 \leqslant i \leqslant n$, constitué d'une résistance variable en série avec une résistance $R_0$ commune.

Le moyen de réglage constitue avec le réseau résistance-capacité 89 le circuit d'équilibrage.

Le signal électrique sinusoïdal noté $V_i$ pour la bobine i, issu de l'oscillateur haute fréquence 44, est injecté dans un commutateur 88 dont chacune des n sorties est reliée à une extrémité de chacune des bobines $B_1$, ... $B_n$. La commutation du signal électrique sinusoïdal $V_i$, séquentiellement sur chacune des sorties du commutateur 88, se fait par l'intermédiaire d'un moyen de commande 96.

Le signal électrique sinusoïdal $V_{bi}$ mesuré aux bornes de la bobine $B_i$ est acheminé vers le moyen de traitement 92, conforme aux circuits des figures 2, 3 et 4. Le moyen de traitement 92 reçoit outre le signal électrique sinusoïdal $V_{bi}$, le signal électrique sinusoïdal $V_i$ issu de l'oscillateur haute fréquence 44. Il détermine la différence de phase entre ces deux signaux et délivre en sortie un signal électrique continûment variable $V_{Si}$ qui rend compte de la distance entre l'extrémité de la bobine $B_i$ et la surface dont on désire mesurer la distance par rapport à ladite bobine $B_i$. On peut effectuer différents traitements sur ce signal électrique $V_{Si}$.

A titre d'exemple, comme dans le cas de la figure, il peut être injecté dans le $i^e$ des n moyens $E_i$ d'échantillonnage et de maintien $E_1$, $E_2$, ..., $E_n$. Il peut aussi être injecté dans un convertisseur analogique digital pour être injecté dans un circuit ou dans une mémoire numérique. La commande d'échantillonnage de l'un des circuits d'échantillonnage et de maintien $E_1$, $E_2$, ..., $E_n$ se fait par l'intermédiaire d'un décodeur 90 possédant n sorties chacune reliée à un circuit d'échantillonnage et de maintien $E_1$, $E_2$, ..., $E_n$ et recevant en entrée les signaux de commande issus des moyens de commande 96.

Le circuit de la figure 5 fonctionne de la façon suivante. Le moyen de commande 96 active la première voie de chaque commutateur 86, 88, et du décodeur 90, c'est-à-dire que l'entrée du commutateur 86 est commutée sur l'élément de réglage $P_1$, la sortie du commutateur 88 sur la bobine $B_1$, la sortie du décodeur 90 sur le moyen d'échantillonnage et de maintien $E_1$. Ce moyen de commande peut être constitué d'une horloge incrémentant un codeur qui adresse les commutateurs 86, 88, et le décodeur 90. La bobine $B_1$ est alors alimentée électriquement par l'oscillateur haute fréquence 44. La fréquence du signal délivré dans la bobine $B_1$ est fonction de la valeur de l'élément de réglage $P_1$. Celle-ci a été au préalable réglée pour que la bobine $B_1$ soit à la surtension. La tension $V_{bl}$ aux bornes de la bobine $B_1$ présente un déphasage avec le signal $V_1$ fourni par l'oscillateur haute fréquence 44 dont l'évaluation fournit une indication sur la distance de la bobine $B_1$ à la surface en vis-à-vis. La valeur de ce déphasage est représentée par un signal $V_{SI}$ qui est échantillonné et maintenu dans le premier circuit d'échantillonnage et de maintien $E_1$. Après une durée d'au moins cinq fois la période de l'oscillateur, l'adresse présentée à la sortie du moyen de commande 96 est incrémentée pour positionner les commutateurs 86, 88 et le décodeur 90 sur la bobine $B_2$ et l'élément de réglage $P_2$ et le deuxième circuit d'échantillonnage et de maintien $E_2$. La tension $V_{b2}$ aux bornes de $B_2$ et la tension de référence $V_2$ sont alors injectées dans le moyen de traitement 92 qui délivre le signal $V_{S2}$. Ce signal est reçu dans le deuxième moyen d'échantillonnage et de maintien $E_2$. Le moyen de commande 96 adresse de la même manière séquentiellement chacune des autres bobines $B_3$, ... $B_n$.

On peut exploiter les signaux $V_{Si}$, ... $V_{Sn}$ recueillis de diverses manières. Si la sonde est utilisée en proximètre, la suite des signaux permet par exemple de reconstituer le profil de la surface analysée; si on désire effectuer une mesure différentielle entre les signaux issus de deux bobines juxtaposées, par exemple pour évaluer la pente d'une surface, on effectue un traitement différentiel sur les signaux. Toute autre combinaison, linéaire ou non, en temps réel ou en différé, est possible sur ces signaux puisqu'ils sont mémorisés dans les moyens d'échantillonnage et de maintien $E_1$, $E_2$, ..., $E_n$.

Le circuit conforme à l'invention de la figure 5, alimente chaque bobine avec un signal de fréquence propre à chaque bobine. Il faut s'assurer que les fréquences d'excitation différentes des bobines n'entraîne pas une sensibilité différente du moyen de traitement 92, ce qui nuirait à la validité des mesures.

Sur la figure 6, on a représenté la courbe de la sensibilité de la mesure de phase en fonction de la fréquence d'excitation des bobines. Il apparaît que cette sensibilité est à peu près constante pour une gamme de fréquence s'étendant de 100 kHz à 500 kHz. Les ajustements de fréquence nécessaires à l'équilibrage des bobines est de l'ordre de 10% à 20% de la fréquence moyenne d'excitation des bobines. En choisissant une fréquence moyenne d'excitation de 300 kHz, il apparaît à la lecture de la courbe de la figure 6, que l'on travaille à sensibilité constante, si l'on s'écarte de ± 20% par rapport à cette valeur moyenne.

Cette courbe a été établie avec un circuit de traitement 92 conforme aux figures 2, 3 et 4. Des résultats analogues seraient obtenus avec d'autres circuits élaborant un signal fonction de la différence de phase entre le signal mesuré aux bornes de la bobine et un signal de référence.

D'autre part, la fréquence de l'oscillateur étant fixée par le produit résistance-capacité RC, le réglage peut évidemment aussi être réalisé selon l'invention à partir d'une résistance $R_0$ commune, d'une capacité $C_0$ commune, et de capacités de réglage $C_i$ pour chaque bobine i.

## Revendications

1. Sonde à courants de Foucault comportant plusieurs bobines et munie d'un dispositif de réglage du courant de repos des bobines, du genre de celles qui comprennent une pluralité de bobines ($B_1$, ... $B_n$), un circuit de réglage dudit courant de repos de chaque bobine ($B_1$, ... $B_n$), un oscillateur haute fréquence (44) pour exciter chaque bobine ($B_1$, ... $B_n$), au moins un moyen de traitement (34) des signaux aux bornes de chaque bobine ($B_1$, ... $B_n$), une pluralité de moyens de mémorisation ($E_1$, ... $E_n$) des signaux traités, chaque moyen de mémorisation étant associé à une bobine, des moyens de commutation (32, 88, 90) entre ces différents moyens et un moyen de commande (96) desdits moyens de commutation (32, 88, 90), ladite sonde étant caractérisée en ce que le circuit de réglage comprend au moins un réseau résistance-capacité (89) et un moyen de réglage (84) de la surtension de chaque bobine ($B_1$, ... $B_n$) agissant sur la fréquence du signal électrique ($V_i$) délivré par l'oscillateur haute fréquence (44) et en ce que le moyen de commande (96) agit sur les moyens de commutation (32, 88, 90) de sorte qu'à chaque instant un seul moyen de mémorisation ($E_1$ ... $E_n$) est adressé, ledit moyen de mémorisation ($E_1$ ... $E_n$) recevant, via ledit moyen de traitement (34), le signal délivré par une bobine ($B_1$ ... $B_n$) réglée à la surtension et reliée à la masse à travers ledit réseau résistance-capacité (89).

2. Dispositif selon la revendication 1, à plusieurs bobines, caractérisé en ce que le moyen de réglage (84) comprend un commutateur (86) dont la sortie est relié à l'oscillateur haute fréquence (44) et dont les entrées, en nombre égal au nombre de bobines ($B_1$, ... $B_n$) sont reliées à des éléments de réglage ($P_1$, ... $P_n$).

3. Dispositif selon la revendication 2, caractérisé en ce que les éléments de réglage ($P_1$, ... $P_n$) sont des résistances variables.

4. Dispositif selon la revendication 2, caractérisé en ce que les éléments de réglage ($P_1$, ... $P_n$) sont des capacités variables.

5. Dispositif selon l'une quelconque des revendications 1 à 4, caractérisé en ce que chaque moyen de traitement (34) est apte à engendrer un signal fonction de la différence de phase entre le signal mesuré aux bornes d'une bobine ($B_1$, ..., $B_n$) et un signal de référence.

6. Dispositif selon l'une quelconque des revendications 1 à 5, caractérisé en ce que les moyens de commutation (32, 88, 90) permettent un adressage séquentiel des bobines ($B_1$, ... $B_n$).

7. Dispositif selon l'une quelconque des revendications 1 à 6, caractérisé en ce que le moyen de traitement (34) est unique.

## Patentansprüche

1. Wirbelstromsensor mit mehreren Spulen und einer Regelungsvorrichtung für den Ruhestrom der Spulen, mit einer Vielzahl von Spulen ($B_1$, ... $B_n$), einem Regelkreis des Ruhestroms für jede Spule ($B_1$, ... $B_n$), einem Hochfrequenzoszillator (44) zur Erregung jeder Spule ($B_1$, ... $B_n$), mindestens einer Verarbeitungseinrichtung (34) für die Signale an den Klemmen jeder Spule ($B_1$, ... $B_n$), einer Vielzahl von Speichereinrichtungen ($E_1$, ... $E_n$) für die verarbeiteten Signale, wobei jede Speichereinrichtung einer Spule zugeordnet ist, Schaltermitteln (32, 88, 90) zwischen diesen verschiedene Einrichtungen und einer Steuereinrichtung (96) für die Schaltermittel (32, 88, 90), dadurch gekennzeichnet, dass der Regelkreis wenigstens eine Widerstands-Kondensator-Schaltung (89) und eine Regeleinrichtung (84) für die Überspannung jeder Spule ($B_1$, ... $B_n$) aufweist, die auf die Frequenz des von dem Hochfrequenzoszillator (44) gelieferten, elektrischen Signals ($V_i$) wirkt, und dass die Steuereinrichtung (96) auf die Schaltermittel (32, 88, 90) derart wirkt, dass zu jedem Zeitpunkt nur eine Speichereinrichtung ($E_1$, ... $E_n$) adressiert ist, wobei die Speichereinrichtung ($E_1$, ... $E_n$) über die Verarbeitungseinrichtung (34) das Signal erhält, welches von einer Spule ($B_1$, ... $B_n$) abgegeben wurde, die bezüglich der Überspannung geregelt und mit Masse über den Widerstands-Kondensator-Schaltkreis (89) verbunden ist.

2. Vorrichtung nach Anspruch 1, mit mehreren Spulen, dadurch gekennzeichnet, dass die Regeleinrichtung (84) einen Schalter (86) umfasst, dessen Ausgang mit dem Hochfrequenzgenerator (44) verbunden ist und dessen Eingänge, deren Anzahl gleich der Anzahl der Spulen ($B_1$, ... $B_n$) ist, mit Regelelementen ($P_1$, ... $P_n$) verbunden sind.

3. Vorrichtung nach Anspruch 2, dadurch gekennzeichnet, dass die Regelelemente ($P_1$, ... $P_n$) veränderbare Widerstände sind.

4. Vorrichtung nach Anspruch 2, dadurch gekennzeichnet, dass die Regelelemente ($P_1$, ... $P_n$) veränderbare Kondensatoren sind.

5. Vorrichtung nach einem der Ansprüche 1 bis 4, dadurch gekennzeichnet, dass jede Verarbeitungseinrichtung (34) ein Signal erzeugen kann, welches von dem Phasenunterschied zwischen dem an den Klemmen einer Spule ($B_1$, ... $B_n$) gemessenen Signal und einem Bezugssignal abhängt.

6. Vorrichtung nach einem der Ansprüche 1 bis 5, dadurch gekennzeichnet, dass die Schaltermittel (32, 88, 90) eine Reihenadressierung der Spulen ($B_1$, ... $B_n$) ermöglichen.

7. Vorrichtung nach einem der Ansprüche 1 bis 6, dadurch gekennzeichnet, dass die Verarbeitungseinrichtung (34) eine einzige ist.

## Claims

1. Foucault currents probe including several coils and provided with a device for the adjustment of the rest state current of the coils, of the type of those which include a number of coils ($B_1$, ... $B_n$), a circuit for the adjustment of the said rest state current of each coil ($B_1$, ... $B_n$), a high frequency oscillator (44) to energize each coil ($B_1$, ... $B_n$), at least one means of processing (34) the signals at the terminals of each coil ($B_1$, ... $B_n$), a number of means of storage ($E_1$, ... $E_n$) of the processed signals, each storage means being associated with one coil, means of switching (32, 88, 90) between these various means and a means of control (96) of the said means of switching (32, 88, 90), the said probe being characterized in that the adjustment circuit includes at least one resistor-capacitor network (89) and a means of adjustment (84) of the overvoltage of each coil ($B_1$, ... $B_n$) acting on the frequency of the electrical signal ($V_i$) delivered by the high-frequency oscillator (44) and in that the means of control (96) acts on the means of switching (32, 88, 90) in such a way that at any time a single means of storage ($E_1$ ... $E_n$) is addressed, the said means of storage ($E_1$ ... $E_n$) receiving, via the said means of processing (34), the signal delivered by a coil ($B_1$ ... $B_n$) adjusted to the overvoltage and connected to ground through the said resistor-capacitor network (89).

2. Device according to Claim 1, with several coils, characterized in that the means of adjustment (84) includes a switcher (86) whose output is connected to the high-frequency oscillator (44) and whose inputs, the number of which is equal to the number of coils ($B_1$ ... $B_n$), are connected to adjustment components ($P_1$, ... $P_n$).

3. Device according to Claim 2, characterized in that the adjustment components ($P_1$, ... $P_n$) are variable resistors.

4. Device according to Claim 2, characterized in that the adjustment components ($P_1$, ... $P_n$) are variable capacitors.

5. Device according to any of Claims 1 to 4, characterized in that each means of processing (34) is capable of producing a signal depending on the phase difference between the signal measured at the terminals of a coil ($B_1$, ... $B_n$) and a reference signal.

6. Device according to any of Claims 1 to 5, characterized in that the means of switching (32, 88, 90) permit a sequential addressing of the coils ($B_1$, ... $B_n$).

7. Device according to any of Claims 1 to 6, characterized in that the means of processing (34) is unique.

FIG. 1

2/3

FIG. 2

FIG. 3

FIG. 4

FIG. 5

FIG. 6